Europäisches Patentamt

European Patent Office

Office européen des brevets

(11) Veröffentlichungsnummer: **0 310 090**
**A1**

(12) **EUROPÄISCHE PATENTANMELDUNG**

(21) Anmeldenummer: **88116132.7**

(22) Anmeldetag: **29.09.88**

(51) Int. Cl.4: **A01G 31/00**

(30) Priorität: **02.10.87 DE 3733440**

(43) Veröffentlichungstag der Anmeldung:
**05.04.89 Patentblatt 89/14**

(84) Benannte Vertragsstaaten:
**DE ES FR GB NL**

(71) Anmelder: **Erwin Sick GmbH Optik-Elektronik**
**Sebastian-Kneipp-Strasse 1**
**D-7808 Waldkirch(DE)**

(72) Erfinder: **Sick, Erwin, Dr.**
**Stifterweg 6**
**D-8021 Icking(DE)**
Erfinder: **Penningsfeld, Franz, Dr.**
**Mauermayrstrasse 9**
**D-8050 Freising(DE)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heijn**
**B.Sc.(Phys.) Morgan**
**Robert-Koch-Strasse 1**
**D-8000 München 22(DE)**

(54) Verfahren und Vorrichtung zum Ergänzen der Nährlösung von Hydrokulturen.

(57) Eine Hydrokultur weist einen Nährlösungstank 11 auf, aus dem Nährlösung durch Kapillar- oder Pumpwirkung den Pflanzenwurzeln zugeführt wird. In diesem Nährlösungstank 11 sind wasserdampf-, aber nicht wasserdurchlässige Speiserohre 12 aus hyrophobem, mikroporigem Material verlegt, durch die ein relativ zur Nährlösung eine deutlich höhere Temperatur aufweisendes Salzwasser geleitet ist. Hierbei wird verbrauchte Nährlösung durch entsalztes Wasser ersetzt.

FIG. 2

## Verfahren und Vorrichtung zum Ergänzen der Nährlösung von Hydrokulturen

Die Erfindung betrifft ein Verfahren und eine Vorrichtung nach den Oberbegriffen der Patentansprüche 1 und 2.

Es ist bereits eine im Erdreich verlegte Bewässerungsvorrichtung bekannt (DE-OS 34 09 510), bei der eine im Erdreich verlegte und Salzwasser führende Rinne durch einen wasserdampf-bzw. wasserdurchlässigen Teil abgedeckt ist. In diesem Teil kondensiert Wasserdampf und bewässert damit den Boden mit Süßwasser.

Eine derartige Bewässerungsvorrichtung eignet sich jedoch nicht zum Ergänzen der Nährlösung von Hydrokulturen, weil durch den wasserdurchlässigen Deckel Wasser auch von dem Flüssigkeitsreservoir der Hydrokultur in das Innere der Salzwasser führenden Rinne eindringen könnte oder umgekehrt.

Das Ziel der Erfindung besteht somit darin, eine Vorrichtung der eingangs genannten Gattung zu schaffen, mittels der auf einfache und wirtschaftliche Weise salzhaltiges Wasser, insbesondere Meerwasser zum Ergänzen der Nährlösung herangezogen werden kann, ohne daß die Salzkonzentration in der Nährlösung ansteigt.

Zur Lösung dieser Aufgabe sieht die Erfindung vor, daß in dem Nährlösungstank wasserdampf-, aber nicht wasserdurchlässige Rohre aus hydrophobem, mikroporigen Material verlegt sind, durch die relativ zur Nährlösung eine höhere Temperatur aufweisendes Salzwasser, insbesondere Meerwasser geleitet wird.

Da die erfindungsgemäß in dem Nährlösungstank verlegten Rohre zwar wasserdampf-, nicht aber wasserdurchlässig sind, kann zwar von innen nach außen Wasserdampf austreten und in der umgebenden kälteren Nährlösung kondensieren, nicht aber umgekehrt Nährlösung in das Innere der Speiserohre eintre ten. Die Speiserohre haben also eine Art Ventilwirkung, indem in ihrer Wandung Wasser nur in gasförmigem Zustand, d.h. als Wasserdampf vorliegt, der sich in Richtung der kälteren Nährlösung bewegt und dort kondensiert. Der Nährlösung wird nur entsalztes. keimfreies Wasser hinzugefügt. Dementsprechend kann die Nährlösung langfristig ohne Auswechsein genutzt werden, wodurch Wasser- und Nährstoffverbrauch der Kulturflächen stark reduziert und durch Salzanreicherung in der Nährlösung verursachte Schäden ausgeschaltet werden. Das salzhaltige Wasser, insbesondere Meerwasser, wird mit einer gegenüber der Temperatur der das Speiserohr umgebenden Nährlösung derart erhöhten Temperatur durch das Speiserohr geleitet, daß eine merkliche Dampfmenge von innen nach außen durch die Wand des Speiserohres tritt und in der umgebenden Nährlösung kondensiert.

Da durch die im Bereich des Speiserohres ständig erzeugte Kondensationswärme sich die Nährlösung langsam erwärmt, ist nach einer weiteren Ausführungsform der Erfindung vorgesehen, daß in dem Nährlösungstank auch nichtdampfdurchlässige Kühlrohre verlegt sind. Auf diese Weise kann die Temperaturdifferenz zwischen dem in den Speiserohren befindlichen Salzwasser und der Nährlösung, die zum Verdampfen des Salzwassers erforderlich ist, ständig aufrechterhalten werden.

Da die durch die Kondensationswärme an den Speiserohren erwärmte Nährlösung nach oben steigt, ist es zweckmäßig, wenn die Speiserohre unterhalb der Kühlrohre verlegt sind. Gemäß einer anderen Ausführungsform können die Speiserohre und Kühlrohre auch batterieartig nebeneinander angeordnet sein.

Eine automatische Steuerung des Flüssigkeitsstandes kann dadurch erzielt werden, daß am Nährlösungstank ein Flüssigkeitsstandsmesser vorgesehen ist, der über eine Flüssigkeitsstandsteuerschaltung ein Speiseventil in den Speiserohren derart beaufschlagt, daß das Speiseventil normalerweise geöffnet, bei Überschreiten eines Maximalflüssigkeitsstandes jedoch geschlossen ist.

Eine automatische Temperatursteuerung kann dadurch erzielt werden, daß am Nährlösungstank ein Temperaturfühler vorgesehen ist, der über eine Temperatursteuerschaltung ein Kühlventil in den Kühlrohren derart beaufschlagt, daß das Kühlventil normalerweise geöffnet, bei Unterschreiten einer Minimaltemperatur jedoch geschlossen wird.

Normalerweise wir die Nährlösung von Hydrokulturen durch Zusatz eines Düngemittels oder eines Nährsalzgemisches zu Wasser hergestellt. Bei Absinken der Nährstoffkonzentration in der Nährlösung unter einen bestimmten Wert müssen die verbrauchten Nährstoffe ersetzt werden. Dies geschieht am besten mit einem Düngerbeimischgerät, das über eine Steuerschaltung eingeschaltet wird, wenn ein in der Nährlösung angeordneter Konzentrationsfühler zu niedrige Werte meldet. Diese Beimischung erfolgt solange, bis die Sollkonzentration erreicht ist. Mit einem solchen Düngerbeimischgerät kann auch neu in den Tank eingefülltes Wasser als Nährlösung hergerichtet werden.

Für den Fall, daß es bei voll gefülltem Nährlösungstank zu einer überhöhten Nährstoffkonzentration in der Nährlösung kommen sollte, ist nach einer weiteren vorteilhaften Ausführungsform vorgesehen, daß an den Konzentrationsfühler über eine Flüssigkeitsablaufsteuerschaltung auch ein Flüssigkeitsablaufventil angeschlossen ist, welches beim Überschreiten der zulässigen Höchstkonzentration und bei maximalem Nährlösungsstand anspricht und dann solange geöffnet bleibt, bis der Flüssigkeitsstand um einen vorbestimmten Betrag abgesunken ist.

Eine weitere vorteilhafte Vorrichtung zur Ausführung des Verfahrens nach Anspruch 1 zeichnet sich dadurch aus, daß in oder angrenzend an eine Nährlösung enthaltende Behälter mittels flächiger Membranen aus hydrophobem, mikroporösem Material Räume abgeteilt sind, durch die Meerwasser bzw. Wasser mit gelösten Stoffen strömt. Von besonderem Vorteil ist hierbei, wenn die durch die Membranflächen abgeteilten, Meerwasser bzw. Wasser mit gelösten Stoffen führenden Räume batterieartig im Wechsel mit den Kühlflächen angeordnet sind. Hierbei, entstehen bei geringem Raumbedarf relativ große Flächen. Damit ist es möglich, den batterieartigen Satz von Kühlflächen und beispielsweise Meerwasser führenden Räumen statt im Nährlösungstank auch im betreffenden Hydrokulturtrog selbst anzuordnen.

Weitere vorteilhafte Ausführungsformen der Erfindung sind in den Unteransprüchen angegeben.

Die Erfindung wird im folgenden beispielsweise anhand der Zeichnung beschrieben; in dieser zeigt:

Fig. 1 eine schematische Schnittansicht einer mit der erfindungsgemäßen Vorrichtung ausgerüsteten Hydrokultur, bei der die Zuleitung der Nährlösung zu den Pflanzenwurzeln durch Kapillarkräfte erfolgt,

Fig. 2 eine schematische Ansicht einer Hydrokultur, bei der die Nährlösung über eine Pumpe dem Pflanzenbeet zugeführt und dort kurzfristig angestaut wird,

Fig. 3 eine andere Ausführungsform der Vorrichtung zum Ergänzen der Nährlösung in schematischer Ansicht,

Fig. 4 eine schematische Wiedergabe einer Heizvorrichtung für das Salzwasser einer erfindungsgemäßen Vorrichtung,

Fig. 5 eine schematische Darstellung eines Nährlösungstanks einer erfindungsgemäßen Vorrichtung mit den daran angeordneten automatischen Steuermitteln, und

Fig. 6 eine schematische Darstellung eines Hydrokulturtrogs, in dem mittels Flächenmembranen abgeteilte, Meerwasser führende Räume batterieartig im Wechsel mit Kühlflächen angeordnet sind.

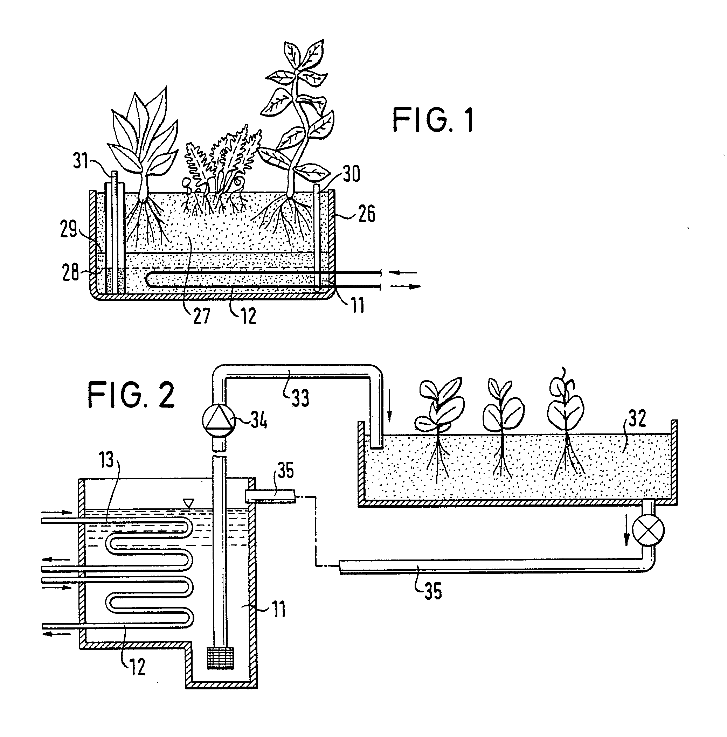

Nach Fig. 1 ist in einem Pflanzengefäß 26 ein Hydrokultursubstrat 27 untergebracht, wobei der Stand der Nährlösung zwischen den Grenzen 28 und 29 schwanken kann. Der Bereich unterhalb der Grenzen 28, 29 stellt den Nährlösungsvorrat 11 dar. Dorthin führt von oben ein Gießrohr bzw. Absaugstutzen 30. Auf der entgegengesetzten Seite ist ein Flüssigkeitsstandsmesser und -anzeiger 31 vorgesehen.

In dem Nährlösungsvorrat oder Nährlösungstank 11 ist U-förmig ein Speiserohr 12 verlegt, welches aus einem hydrophoben, mikroporigen Material besteht, wie es im einzelnen in der DE-OS 36 10 548 beschrieben ist. Das Speiserohr kann, wie z.B. in Fig. 2 gezeigt, auch schlangenförmig verlegt sein. In Richtung der Pfeile wird dieses Speiserohr 12 von Salzwasser, insbesondere Meerwasser durchströmt. Dieses Wasser ist so stark erwärmt, daß gegenüber der Nährlösung im Nährlösungstank 11 eine deutliche Temperaturdifferenz besteht, so daß durch die Wände des Speiserohrs 12 hindurch Wasserdampf austritt und in der Nährlösung kondensiert. Hierdurch kann der Flüssigkeitsstand ständig oberhalb der unteren Grenze 28 gehalten werden.

Beim Ausführungsbeispiel nach Fig. 2 wird ein Pflanzenbeet 32 über ein Zulaufrohr 33 und eine Pumpe 34 aus einem besonderen Nährlösungstank 11 bewässert. Die Nährlösung wird kurzfristig im Beet 32 angestaut und fließt anschließend über ein Rücklaufrohr 35 zurück in den Nährlösungstank 11. Dieses Rücklaufrohr 35 mündet oberhalb des Wasserspiegels des Nährlösungstanks 11 in diesen Tank.

Innerhalb des Nährlösungstanks 11 sind übereinander ein von erhitztem Salzwasser durchströmtes Speiserohr 12 und ein Kühlrohr 13 verlegt, welches aus nicht dampfdurchlässigem Material besteht und in Richtung der Pfeile von einer Kühlflüssigkeit durchströmt wird.

Bei dieser Ausführungsform dringt Wasserdampf durch das Speiserohr 12 in die Nährlösung ein und kondensiert dort. Die Dabei entstehende Wärme wird durch die darüber befindlichen Kühlrohre 13 abgeführt.

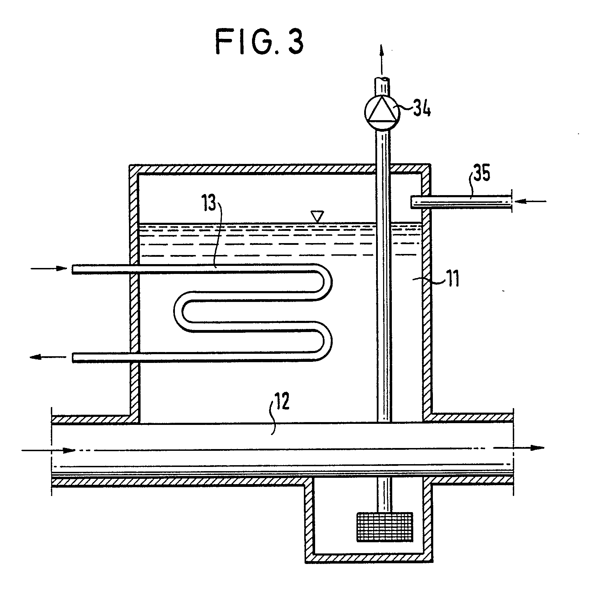

Bei dem Ausführungsbeispiel nach Fig. 3 ist statt der nach Fig. 2 vorgesehenen Rohrschlange als Speiserohr 12 ein flächiges Hohlgebilde am Boden des Nährlösungstanks verlegt. Dieses Hohlgebilde 12 besteht nur im innerhalb des Nährlösungstanks 11 liegenden Bereich aus wasserdampfdurchlässigem Material.

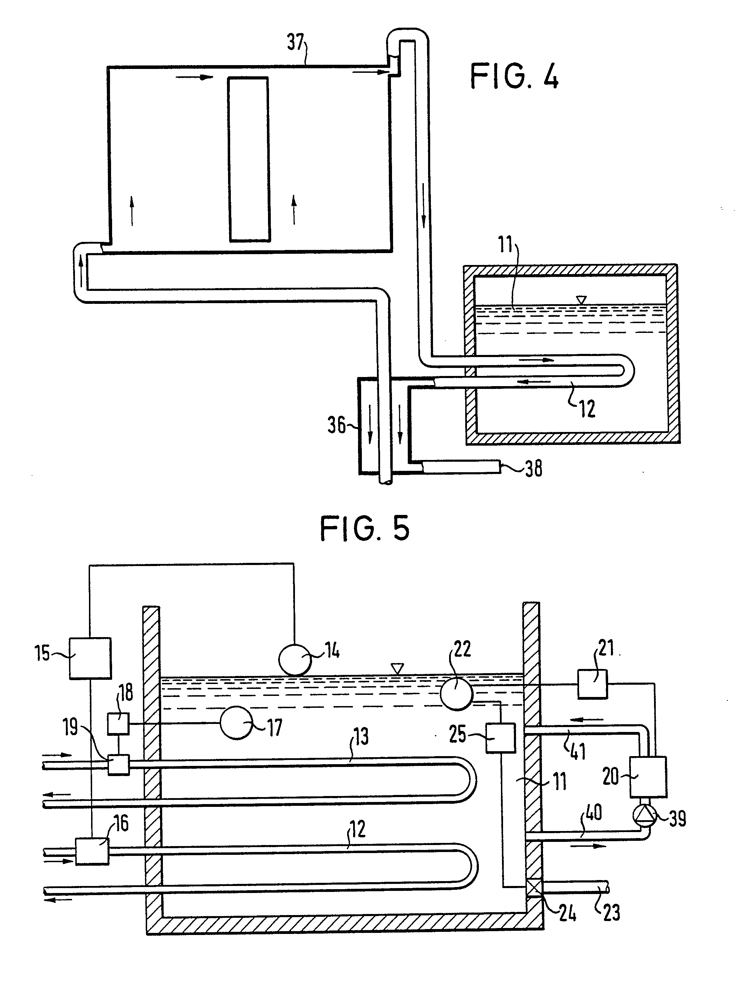

Gemäß Fig. 4 wird einem als Flachkollektor ausgebildeten Wärmeaustauscher 37 frisches Salz- bzw. Meerwasser zugeführt. Das Salz- bzw. Meerwasser tritt in stark erhitztem Zustand oben aus dem Wärmeaustauscher 37 aus. Von dort gelangt es in das Speiserohr 12, wo die Wasserdampfabgabe an die Nährlösung und eine teilweise Abkühlung erfolgt. Die Restwärme des Salzwassers wird dann in einem Wärmeaustauscher 36 an neu herangeführtes kühles Salzwasser abgegeben, ehe die stärker konzentrierte und abgekühlte Salzlösung an einem Auslaß 38 austritt.

In Fig. 5 ist gezeigt, wie die erfindungsgemäße Vorrichtung vollautomatisch gesteuert werden kann.

Im Eingang des Speiserohrs 12 ist ein Speiseventil 16 angeordnet, welches von einer Flüssigkeitsstandsteuerschaltung 15 beaufschlagt ist, die an einen Flüssigkeitsstandmesser 14 angeschlossen ist. Auf diese Weise wird erreicht, daß das Ventil 16 beim Überschreiten des maximalen Flüssigkeitsstandes im Flüssigkeitsreservoir 11 geschlossen wird. Andernfalls ist das Speiseventil 16 geöffnet.

Weiter ist am Nährlösungstank 11 ein Temperaturfühler 17 angeordnet, der über eine Temperatursteuerschaltung 18 ein im Eingang des Kühlrohrs 13 vorgesehens Kühlventil 19 beaufschlagt. Das Kühlventil 19 ist normalerweise geöffnet und wird bei Unterschreitung einer vorbestimmten Temperatur am Temperaturfühler 17 geschlossen.

Schließlich ist am Nährlösungstank 11 noch ein Nährstoffbeimischer 20 vorgesehen, der eine Pumpe 39 enthält und durch ein Zuführrohr 40 Nährlösung bzw. Wasser aus dem Nährlösungstank 11 absaugen kann. Diese Flüssigkeitsmenge wird dann mit Nährstoffen angereichert und durch ein Auslaßrohr 41 wieder dem Nährlösungstank 11 zugeführt.

Der Nährstoffbeimischer 20 wird durch eine Nährstoffbeigabesteuerschaltung beaufschalgt, die an einen Konzentrationsfühler 22 angeschlossen ist, welcher auf die Nährstoffkonzentration im Nährlösungstank 11 anspricht. Bei zu niedriger Nährstoffkonzentration wird der Nähstoffbeimischer 20 solange eingeschaltet, bis die vorgegebene Sollkonzentration erreicht ist. Die Nährstoffkonzentration kann z.B. durch eine Leitfähigkeitsmessung oder durch Nitrat-Elektroden festge stellt werden.

Der Konzentrationsfühler 22 ist außerdem an eine Flüssigkeitsablaufsteuerschaltung 25 angelegt, welche ein Flüssigkeitsablaufventil 24 beaufschlagt, an das ein Ablaufrohr 23 angelegt ist. Wird bei maximalem Flüssigkeitsstand eine zu hohe Nährstoffkonzentration ermittelt, so wird durch die Flüssigkeitsablaufsteuerschaltung 25 das Ventil 24 für eine gewisse Zeit geöffnet, so daß übermäßig konzentrierte Nährstofflösung abfließt und dann anschließend nach erneutem Schließen des Ventils 24 durch am Speiserohr 12 entstehendes reines Wasser ergänzt wird, worauf die Nährstoffkonzentration in der erforderlichen Weise absinkt.

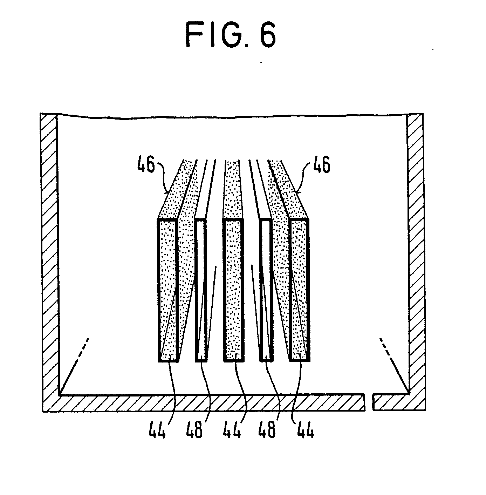

In Fig. 6 ist eine schematische Darstellung eines Hydrokulturtrogs gezeigt, der eine Nährlösung enthält und in dem mittels Membranflächen 46 aus hydrophobem, mikroporösem Material Räume 44 abgeteilt sind, durch das Meerwasser bzw. Wasser mit gelöstem Stoffen strömt.

Die durch die Membranflächen 46 abgeteilten, beispielsweise Meerwasser führenden Räume 44 sind batterieartig im Wechsel mit Kühlflächen 48 angeordnet. Damit ergibt sich ein insgesamt platzsparender Einsatz mit relativ großen Außenflächen sowohl für die meerwasserführenden Räume 44 als auch die Hohlgebilde darstellenden Kühlelemente 48.

## Ansprüche

1. Verfahren zum Ergänzen der Nährlösung Hydrokulturen mit entsalztem Wasser,
dadurch **gekennzeichnet,**
daß in der Nährlösung Trennwände aus hydrophobem, mikroporösem Material angeordnet sind, die die Nährlösung von einem erwärmtes Wasser mit gelösten Stoffen, insbesondere Salzwasser enthaltenden Bereich abgrenzen.

2. Vorrichtung zum Ergänzen der Nährlösung bzw. des Wassers von Hydrokulturen, bei denen ein Nährlösungstank vorgesehen ist, aus dem die Nährlösung durch Kapillarkräfte oder Pumpwirkung den Pflanzenwurzeln zugeführt wird, insbesondere nach Anspruch 1,
dadurch **gekennzeichnet,**
daß in dem Nährlösungstank (11) wasserdampf-, aber nicht wasserdurchlässige Rohre (12) aus hydrophobem, mikroporigen Material verlegt sind, durch die relativ zur Nährlösung eine höhere Temperatur aufweisendes Salzwasser, insbesondere Meerwasser, geleitet ist.

3. Vorrichtung nach Anspruch 2,
dadurch **gekennzeichnet,**
daß in dem Nährlösungstank (11) auch nichtdampfdurchlässige Kühlrohre (13) verlegt sind, wobei vorzugsweise die Speiserohre (12) entweder unterhalb oder oberhalb der Kühlrohre (13) verlegt oder die Speiserohre (12) und Kühlrohre (13) batterieartig nebeneinander angeordnet sind.

4. Vorrichtung nach einem der vorhergehenden Ansprüche,
dadurch **gekennzeichnet,**
daß am Nährlösungstank (11) ein Flüssigkeitsstandmesser (14) vorgesehen ist, der über eine Flüssigkeitsstandssteuerschaltung (15) ein Speiseventil (16) in den Speiserohren (12) derart beaufschlagt, daß das Speiseventil (16) normalerweise geöffnet, bei Überschreiten eines Maximalflüssigkeitsstandes jedoch geschlossen wird.

5. Vorrichtung nach einem der vorhergehenden Ansprüche,
dadurch **gekennzeichnet,**
daß am Nährlösungstank (11) ein Temperaturfühler (17) vorgesehen ist, der über eine Temperatursteuerschaltung (18) ein Kühlventil (19) in den Kühlrohren (13) derart beaufschlagt, daß das Kühlventil (19) normalerweise geöffnet, bei Unterschreiten einer Minimaltemperatur jedoch geschlossen wird.

6. Vorrichtung nach einem der vorhergehenden Ansprüche,
dadurch **gekennzeichnet,**
daß ein Nährstoffbeimischer (20) am Nährlösungstank (11) angeordnet ist, welcher über eine Nährstoffbeigabesteuerschaltung (21) angesteuert ist, die an einen in der Nährlösung angeordneten Konzentrationsfühler (22) angeschlossen ist, um beim Absinken der Nährstoffkonzentration unter einen vorbestimmten Wert den Nährstoffbeimischer (20) bis zum Erreichen der Sollkonzentration einzuschalten, wobei vorzugsweise an den Konzentrationsfühler (22) über eine Flüssigkeitsablaufsteuerschaltung (25) auch ein Flüssigkeitsablaufventil (24) angeschlossen ist, welches beim Überschreiten einer festgelegten Höchstkonzentration und bei maximalem Nährlösungsstand anspricht und dann solange geöffnet bleibt, bis der Flüssigkeitsstand um einen vorbestimmten Betrag abgesunken ist.

7. Vorrichtung zur Ausführung des Verfahrens nach Anspruch 1,
dadurch **gekennzeichnet,**
daß in oder angrenzend an eine Nährlösung enthaltende Behälter mittels flächiger Membranen (46) aus hydrophobem, mikroporösem Material Räume (44) abgeteilt sind, durch die Meerwasser bzw. Wasser mit gelösten Stoffen strömt, wobei zweckmäßig die Trennwände (46) aus hydrophobem, mikroporösem Material in dem Nährlösungstank (11) des Hydrokultursystems angeordnet sind.

8. Vorrichtung nach Anspruch 7,
dadurch **gekennzeichnet,**
daß die Membranflächen (46) in den Hydrokulturtrögen selbst und/oder in der Nährlösung zusätzlich Kühlrohre oder Kühlflächen (48) angeordnet sind.

9. Vorrichtung nach Anspruch 7 oder 8,
dadurch **gekennzeichnet,**
daß die durch die Membranflächen (46) abgeteilten, Meer wasser bzw. Wasser mit gelösten Stoffen führenden Räume (44) batterieartig im Wechsel mit den Kühlflächen (48) angeordnet sind.

10. Vorrichtung nach einem der Ansprüche 7 bis 9,
dadurch **gekennzeichnet,**
daß über Füllstandsmesser das Hindurchtreten des Wassers mit gelösten Stoffen geregelt wird.

FIG. 1

FIG. 2

# FIG. 3

FIG. 4

FIG. 5

# FIG. 6

**Europäisches Patentamt**

# EUROPÄISCHER RECHERCHENBERICHT

Nummer der Anmeldung

EP    88 11 6132

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| A | US-A-4178715 (GREENBAUM) <br> * das ganze Dokument * <br> --- | 1, 2 | A01G31/00 |
| A | DE-A-3501748 (WINTERMANTEL) <br> * Seite 17, Absatz 1; Ansprüche 1, 5; Figur 18 * <br> ----- | 1, 2 | |
| | ₀ | | **RECHERCHIERTE SACHGEBIETE (Int. Cl.4 )** |
| | | | A01G |

Der vorliegende Recherchenbericht wurde für alle Patentansprüche erstellt

| Recherchenort | Abschlußdatum der Recherche | Prüfer |
|---|---|---|
| DEN HAAG | 23 DECEMBER 1988 | HERYGERS J.J. |